# EUROPÄISCHE PATENTSCHRIFT

(11) **EP 2 115 312 B1**
(45) Veröffentlichungstag und Bekanntmachung des Hinweises auf die Patenterteilung: **13.06.2012**
(21) Anmeldenummer: 07821768.4
(22) Anmeldetag: 24.10.2007
(51) Int. Cl.: F16D 23/14

(54) **KUPPLUNGSAUSRÜCKLAGEREINRICHTUNG**
CLUTCH RELEASE BEARING DEVICE
ENSEMBLE DE PALIER DE DÉBRAYAGE

(30) Priorität: 15.12.2006 DE 102006059300
(43) Veröffentlichungstag der Anmeldung: 11.11.2009
(73) Patentinhaber: Schaeffler Technologies AG & Co. KG, 91074 Herzogenaurach (DE)
(72) Erfinder: DITTMER, Steffen, 91086 Aurachtal (DE); GIETL, Thomas, 91257 Pegnitz (DE); PESCHKE, Harald, 90587 Veitsbronn (DE)
(86) Internationale Anmeldenummer: PCT/EP2007/061405
(87) Internationale Veröffentlichungsnummer: WO 2008/071495

(56) Entgegenhaltungen:
- DE-A1- 3 723 334
- DE-A1- 10 148 388
- DE-A1-102004 034 439
- FR-A- 2 559 861
- FR-A1- 2 854 215
- US-A- 4 771 874
- US-A1- 2006 081 439

## Beschreibung

### Gebiet der Erfindung

Die Erfindung richtet sich auf eine Kupplungsausrücklagereinrichtung die als solche ein Wälzlager umfasst und insgesamt dazu dient eine Axialkraft auf ein Kupplungsorgan, beispielsweise eine Kupplungsfederplatte zu übertragen und dieses Kupplungsorgan hierbei zu verlagern.

### Hintergrund der Erfindung

Aus DE 101 48 388 A1 ist eine Kupplungsausrücklagereinrichtung der eingangs genannten Art bekannt. Diese Kupplungsausrücklagereinrichtung umfasst einen Innenring, einen Außenring sowie in einem zwischen diesen beiden Ringen definierten Ringraum aufgenommene Wälzkörper. Der zwischen diesen beiden Ringen definierte Ringraum ist stirnseitig durch Abdeckstrukturen abgedeckt. Der Außenring des Wälzlagers ist mit einem Druckringabschnitt versehen. Auf einer diesem Druckringabschnitt abgewandten Lagerrückseite ist ein Abdeckring angebracht, der eine Dichtlippenstruktur umfasst. Die Dichtlippenstruktur bildet eine Dichtlippe, die auf einem durch den Innenring des Wälzlagers gebildeten Dichtlippenlaufbereich aufsitzt.

### Aufgabe der Erfindung

Der Erfindung liegt die Aufgabe zugrunde Lösungen zu finden, die es ermöglichen Kupplungsausrücklagereinrichtungen zu realisieren die auf kostengünstige Weise herstellbar sind und sich gegenüber bisherigen Bauweisen durch weiter verbesserte Funktionseigenschaften, auszeichnen.

### Erfindungsgemäße Lösung

Diese Aufgabe wird erfindungsgemäß gelöst durch eine Kupplungsausrücklagereinrichtung mit den Merkmalen des Anspruchs 1.

Dadurch wird es auf vorteilhafte Weise möglich, eine Kupplungsausrücklagereinrichtung zu schaffen, bei welcher eine besonders zuverlässige Abschirmung des zwischen dem Außenring und dem Innenring definierten Lagerinnenraums zur Umgebung hin erreicht werden kann. In besonders vorteilhafter Weise kann, unabhängig von den Eigenschaften des zur Realisierung des Innenrings verwendeten Stahlmateriales, eine Lauffläche für die Dichtlippe geschaffen werden deren Oberflächen- und Materialeigenschaften eine hohe Lebensdauer der Dichtungseinrichtung gewährleisten. Über das Ringelement können in vorteilhafter Weise auch Wandungsabschnitte bereitgestellt werden, durch welche sich eine vorteilhafte Abschirmung der Dichtlippeneinrichtung ergibt und damit ein weiterer Schutz derselben erreicht werden kann. Durch das Ringelement können auch hinsichtlich der Funktion und Lebensdauer der Dichtlippe ideale, oder zumindest äußerst vorteilhafte geometrische Verhältnisse sichergestellt werden. Das Ringelement kann insbesondere aus einem hochabrasionsbeständigen Werkstoff gefertigt werden, der eine Füllung des zur Fertigung der Dichtlippe verwendeten Materiales mit keramischen und/oder metallischen Füllstoffen erlaubt.

Die Dichtungseinrichtung ist vorzugsweise derart ausgebildet, dass die Dichtlippe wenigstens eine Dichtlippenkante bildet, die auf der durch das Ringelement bereitgestellten Dichtlippenlauffläche aufsitzt. Die Dichtlippe kann auch so ausgebildet sein, dass diese mehrere Dichtlippenkanten bildet, die als solche auf der Dichtlippenlauffläche aufsitzen. Die Dichtlippe kann hierbei derart gestaltet sein, dass die jeweiligen Dichtlippenkanten mit unterschiedlichen Flächenpressungen auf der Dichtlippenlauffläche aufsitzen. Vorzugsweise ist die Geometrie der Dichtlippeneinrichtung so abgestimmt, dass eine erforderliche Mindestanpressung unter entsprechender elastischer Deformation der Dichtlippeneinrichtung erreicht wird.

In die Dichtlippeneinrichtung können Stützstrukturen eingebunden sein durch welche die mechanischen Eigenschaften derselben gezielt abgestimmt werden können. Diese Stützstrukturen können als metallische Einlagen, insbesondere Drahtringe ausgeführt sein. Es ist auch möglich die Stützstrukturen aus einem Kunststoffmaterial zu fertigen und das zur Bildung der Dichtlippe verwendete Kunststoffmaterial an diese Stützstruktur anzuspritzen. Es ist weiterhin auch möglich, zunächst die Elastomerstrukturen zu fertigen und Abschnitte aus Materialien höherer Steifigkeit, oder mit anderen Materialeigenschaften an diese Elastomerstruktur anzuspritzen. Zur Schaffung belastbarer Verbindungszonen können entsprechende Verankerungsgeometrien und ggf. auch stoffliche Vorbehandlungen, insbesondere Corona-Behandlungen erfolgen.

Das Ringelement ist vorzugsweise aus einem gehärteten Stahlmaterial gefertigt und auf einen Außenflächenabschnitt des Innenrings unter einem leichten Presssitz aufgesetzt. An dem Ringelement können Raststrukturen ausgebildet sein, die als solche eine zusätzliche Fixierung und Sicherung des Ringelementes auf dem genannten Außenflächenabschnitt ermöglichen.

Weiterhin ist es möglich, das Ringelement durch Zugabe von Klebe- oder Dichtmitteln an dem Innenring zu sichern. In vorteilhafter Weise kann der auf dem Außenflächenabschnitt des Innenrings aufsitzende Innenumfangsbereich des Ringelementes mit einer Beschichtung, insbesondere einer dünnen Elastomer-Materiallage versehen sein, durch welche auch die Sitzfläche des Ringelementes, d.h. der Fügespalt zwischen dem Innenring und dem darauf sitzenden Ringelement verbessert abgedichtet wird.

Das Ringelement ist erfindungsgemäβ hinsichtlich seines Querschnittes derart gestaltet, dass dieses einen zylindermantelartigen Buchsenabschnitt und einen sich im wesentlichen radial zur Lagerachse erstreckenden Ringabschnitt umfasst. Das Ringelement wird derart verbaut, dass jener Ringabschnitt sich in einem Zwischenbereich zwischen dem Wälzkörperbahnraum und der Dichtlippe erstreckt. Hierdurch wird es möglich, die Dichtlippe von dem im Bahnraum durch die Wälzkörper und Käfigstrukturen mitgeschleppten Fettstrom abzuschirmen. Der Ringabschnitt kann hierbei hinsichtlich seines Außendurchmessers derart gestaltet sein, dass ein äußerst geringer Bewegungsspalt zwischen der Aussenumfangswandung des Ringabschnittes und der benachbarten Innenumfangswandung des Außenringes verbleibt. Es ist möglich, auch die durch den Ringabschnitt definierte, und der Dichtlippeneinrichtung zugewandte Stirnfläche als weitere Dichtlippenanlagefläche heranzuziehen, durch welche eine zusätzliche Dichtungsfunktion erreicht werden kann.

Bei dem zur Bildung der Dichtlippenstruktur herangezogenen Kunststoffmaterial handelt es sich vorzugsweise um ein lösemittelbeständiges Elastomermaterial, wie es beispielsweise allgemein zur Realisierung von Radialwellendichtringen verwendet wird.

Die Befestigung der Dichtlippenstruktur erfolgt vorzugsweise am Außenring und zwar insbesondere unter Verwendung eines Armierungsringes. Dieser Armierungsring kann so gestaltet sein, dass dieser auf einen Außenflächenabschnitt des Außenringes aufgepresst werden kann. Die Befestigung der Dichtlippenstruktur an jenem Armierungsring kann durch geeignete Querschnittsgestaltungen der Dichtlippenstruktur auf formschlüssigem Wege erreicht werden. Es ist auch möglich, das zur Bildung der Dichtlippenstruktur verwendete Kunststoffmaterial, insbesondere Elastomermaterial an den Armierungsring anzukleben, anzuvulkanisieren, oder anderweitig mit diesem haftend zu verbinden.

Das erfindungsgemäße Konzept zur Abdichtung des Wälzkörperbahnraumes einer Kupplungsausrücklagereinrichtung eignet sich insbesondere bei Ausrücklagereinrichtungen, bei welchen eine Gelenkeinrichtung vorgesehen ist, die ein geringfügiges Kippen der Ausrücklagereinrichtung um Achsen ermöglicht, die als solche quer zur eigentlichen Lagerachse verlaufen. Derartige Gelenkeinrichtungen können insbesondere durch Kalottenringstrukturen realisiert sein. Diese Kalottenringstruktur kann einen Kalottenringabschnitt umfassen, der als solcher integralen Bestandteil des Innenrings des Wälzlagers bildet. Das erfindungsgemäße, die Dichtlippenlauffläche bildende Ringelement kann hierbei auf einen Endabschnitt jenes Kalottenringabschnittes, insbesondere im Bereich des größten Außendurchmessers desselben aufgesetzt sein. Hierdurch wird durch den sich radial nach außen weitenden Abschnitt des Kalottenringes eine Annäherung der Sitzfläche des Ringelementes an den Außenring erreicht, so dass die Dichtlippenstruktur nur noch einen relativ kleinen Restspalt zu überbrücken hat.

### Kurze Beschreibung der Zeichnungen

Weitere Einzelheiten und Merkmale der Erfindung ergeben sich aus der nachfolgenden Beschreibung in Verbindung mit der Zeichnung anhand bevorzugter Ausführungsbeispiele . Es zeigt:
- **Figur 1**: eine Axial-Schnittdarstellung zur Veranschaulichung des Aufbaus einer erfindungsgemäßen Kupplungsausrücklagereinrichtung;
- **Figur 2**: eine Detail-Schnittdarstellung zur weiteren Veranschaulichung technischer Einzelheiten der erfindungsgemäßen Kupplungsausrücklagereinrichtung.

### Ausführliche Beschreibung der Zeichnungen

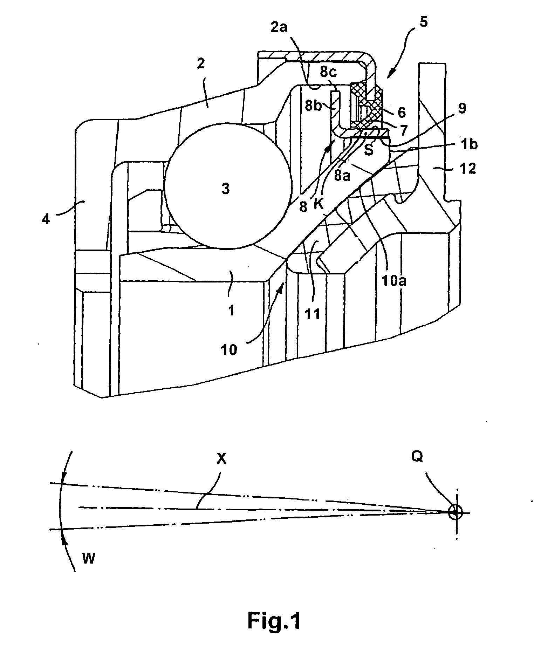

Die in Figur 1 dargestellte Kupplungsausrücklagereinrichtung umfasst einen Innenring 1, einen Außenring 2 sowie eine Wälzkörperanordnung 3, die in einem zwischen dem Innenring 1 und dem Außenring 2 definierten Bahnraum aufgenommen ist. Die Kupplungsausrücklagereinrichtung umfasst weiterhin einen Druckringabschnitt 4, der als solcher der Einleitung einer über die Wälzkörperanordnung 3 geführten Axialkraft in ein zugeordnetes Kupplungsorgan (beispielsweise Federplatte) dient. Die Kupplungsausrücklagereinrichtung umfasst weiterhin eine Dichtungseinrichtung 5 zur Abdichtung eines Bewegungsspaltes auf einer dem Druckringabschnitt 4 abgewandten Lagerrückseite. Die Dichtungseinrichtung 5 umfasst eine Dichtlippenstruktur 6, die aus einem Kunststoffmaterial, insbesondere einem Elastomermaterial gefertigt ist und eine Dichtlippe 7 aufweist.

Die hier dargestellte Kupplungsausrücklagereinrichtung zeichnet sich insbesondere dadurch aus, dass ein Ringelement 8 vorgesehen ist, das eine Dichtlippenlauffläche S bildet, auf welcher die Dichtlippe 7 über wenigstens eine Dichtlippenkante K aufsitzt. Die Dichtlippe ist in einem radial außen liegenden Fußbereich verankert und erstreckt sich radial einwärts von jenem Fußbereich hin zur Dichtlippenkante K. Die Dichtlippe 7 ist hinsichtlich ihres Querschnitts derart gestaltet, dass diese im Axialschnitt gegenüber einer die Lagerachse X senkrecht schneidenden Radialebenen angestellt ist. Vorzugsweise umfasst ist die Dichtlippe 7 einen Kegelringkorpus der sich vom radial außen liegenden Fußbereich zur Dichtlippenkante K hin einwärts , d.h. in Richtung zur Wälzkörperanordnung hin erstreckt.

Das Ringelement 8 ist auf einen Außenflächenabschnitt 9 des Innenrings 1 aufgesetzt. Das Ringelement 8 ist hinsichtlich seines Querschnitts derart gestaltet, dass dieses einen Buchsenabschnitt 8a und einen sich im wesentlichen radial zur Lagerachse X erstreckenden Ringabschnitt 8b umfasst.

Der Ringabschnitt 8b befindet sich in einem Zwischenbereich zwischen dem zur Aufnahme der Wälzkörperanordnung 3 vorgesehenen Wälzkörperbahnraum und der Dichtlippe 7. Hierdurch wird die Dichtlippe 7 wirkungsvoll von dem im Innenbereich der Wälzlagereinrichtung mitgerissenen Fettstrom abgeschirmt. Es ist möglich, den Ringabschnitt 8b derart zu gestalten, dass dessen Außenumfangsflächenabschnitt 8c relativ nahe an die Innenumfangswandung 2a des Außenringes 2 heranragt, sodass hier nur noch ein äußerst kleiner Bewegungsspalt verbleibt.

Das Ringelement 8 ist bei dem hier gezeigten Ausführungsbeispiel mit einem leichten, jedoch zur sicheren Verankerung hinreichend starken Presssitz auf den Außenflächenabschnitt 9 des Innenrings 1 aufgepresst. Es ist möglich, an dem Ringelement 8 Sicherungs- und Wulststrukturen auszubilden, durch welche die Verankerung und geometrisch korrekte Positionierung des Ringelementes 8 an dem Innenring 1 weiter verbessert wird.

Die hier gezeigte Kupplungsausrücklagereinrichtung umfasst eine Ausgleichsgelenkeinrichtung 10, die ein Kippen des Innenrings 1 und damit der gesamten von diesem getragenen Wälzlageranordnung um eine Querachse Q ermöglicht, die quer zur Lagerachse X verläuft. Bei dem hier gezeigten Ausführungsbeispiel ist die Gelenkeinrichtung 10 derart gestaltet, dass diese einen Kalottenringabschnitt 10a umfasst der auf einem komplementär hierzu gestalteten Gleitring 11 sitzt. Der Gleitring 11 ist an einem Halteflansch 12 befestigt. Die Gelenkeinrichtung 10 ist derart gestaltet, dass diese ein Kippen des Innenrings 1 um einen Winkel W ermöglicht, der beispielsweise in etwa im Bereich von 7 Grad liegt.

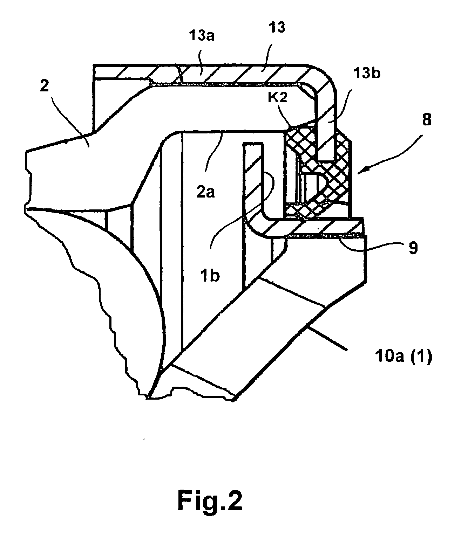

Wie aus Figur 2 weiter ersichtlich, ist die Dichtungseinrichtung 8 an dem Außenring 2 über einen Armierungsring 13 befestigt, der auf einer Außenumfangsfläche eines hinteren Abschnitts des Außenrings 2 sitzt. Der Armierungsring 13 umfasst einen auf die Außenfläche des Außenrings 2 aufgepressten Zylindermantelabschnitt 13a und einen radial einwärts zur Dichtungseinrichtung 8 vordringenden Ringabschnitt 13b.

Bei dem hier gezeigten Ausführungsbeispiel ist die Dichtungseinrichtung 8 in ihrem Querschnitt derart gestaltet, dass diese im wesentlichen formschlüssig auf einem hier erkennbaren nach innen über die Innenumfangsfläche 2a des Außenrings 2 überstehenden Umfangssteg sitzt. Es ist möglich, die Dichtlippeneinrichtung 8 auch stofflich, insbesondere durch Anvulkanisieren mit dem Armierungsring 13 festhaftend zu verbinden.

Bei dem hier gezeigten Ausführungsbeispiel ist die Dichtlippeneinrichtung 5 in elastisch verspanntem Zustand dargestellt ( in Figur 1 taucht diese aus zeichnerischen Gründen in das Material des Ringelementes bzw. des Außenringes 2 ein). Die entsprechenden Wandungsabschnitte der Dichtlippenstruktur liegen unter leichter elastischer Vorspannung an den abzudichtenden Wandungen an.

Die Dichtlippeneinrichtung 5 ist an sich derart gestaltet, dass durch diese eine Abdichtung sowohl im Bereich der Dichtlippenkante K (Bewegungsdichtung) als auch in einem Anlagebereich K2 (statische Abdichtung) erreicht wird indem das zur Bildung der Dichtlippeneinrichtung 5 vorgesehene Elastomermaterial an einem Wandungsabschnitt des Außenrings 2 ansteht.

Bei der vorangehend beschriebenen erfindungsgemäßen Kupplungsausrücklagereinrichtung befindet sich die zur Aufnahme des Ringelementes 8 vorgesehene Sitzfläche auf einem Umfangsniveau dessen Abstandsradius zur Lagerachse X größer ist als der Abstand der Zentren der bei diesem Ausführungsbeispiel als Kugeln ausgeführten Wälzkörper 3 von jener Lagerachse X. Die Anhebung des Sitzflächenabschnitts 9 auf dieses Umfangsniveau erfolgt durch den als Kalottenringabschnitt 10a fungierenden Bereich des Innenrings 1. Durch die derartige Gestaltung des Innenrings 1 wird es möglich, den abzudichtenden Bewegungsspalt zwischen dem Innenring 1 und der Innenfläche des Außenrings 2 erheblich zu verkleinern.

Die Erfindung ist nicht auf das vorangehend beschriebene Ausführungsbeispiel beschränkt. Insbesondere ist es auch möglich, das Ringelement 8 mit Querschnittsgestaltungen zu realisieren, die von dem beschriebenen Ausführungsbeispiel abweichen. An dem Ringelement 8 können insbesondere auch Ringflankenabschnitte ausgebildet sein, die als solche auf einer Stirnfläche 1 b (siehe Figur 1) des Innenrings 1 aufsitzen. Die Befestigung der Dichtlippenstruktur 5 an dem Außenring 2 kann auch in einer von dem hier gezeigten Ausführungsbeispiel abweichenden Weise erfolgen. Insbesondere ist es möglich, die Dichtlippenstruktur lediglich an einer Innenumfangswandung des Außenrings 2 zu sichern.

Unter dem Begriff Kupplungsausrücklagereinrichtung sind im vorliegenden Kontext neben Lagereinrichtungen bei welchen im Belastungszustand ein Kupplungseingriffszustand aufgehoben ist, ausdrücklich auch solche Lagereinrichtungen zu verstehen durch welche im Belastungszustand ein Kupplungseingriffzustand hergestellt ist.

### Bezugszeichen liste

- 1: Innenring
- 1 b: Stirnfläche
- 2: Aussenring
- 2a: Innenumfangswandung
- 3: Wälzkörperanordnung
- 4: Druckringabschnitt
- 5: Dichtungseinrichtung
- 6: Dichtlippenstruktur
- 7: Dichtlippe
- 8: Ringelement
- 8a: Buchsenabschnitt
- 8b: Ringabschnitt
- 8c: Außenflächenumfangsabschnitt
- 9: Außenflächenabschnitt
- 10: Gelenkeinrichtung
- 10a: Kalottenringabschnitt
- 11: Gleitring
- 12: Halteflansch
- 13: Armierungsring
- 13a: Zylindermantelabschnitt
- 13b: Ringabschnitt
- K: Dichtlippenkante
- K2: Anlagebereich / Kontaktzone
- S: Dichtlippenlauffläche
- X: Lagerachse
- Q: Querachse

## Patentansprüche

1. Kupplungsausrücklagereinrichtung mit:
- einem Innenring (1),
- einem Außenring (2),
- einer Wälzkörperanordnung (3) die in einem zwischen dem Innenring (1) und dem Außenring (2) definierten Bahnraum aufgenommen ist,
- einem Druckringabschnitt (4) zur Einleitung einer über die Wälzkörperanordnung (3) geführten Axialkraft in ein zugeordnetes Kupplungsorgan, und
- einer Dichtungseinrichtung (5) zur Abdichtung eines Bewegungsspaltes auf einer dem Druckringabschnitt (4) abgewandten Lagerrückseite, wobei die Dichtungseinrichtung (5) eine Dichtlippenstruktur (6) umfasst die aus einem Kunststoffmaterial gefertigt ist und eine Dichtlippe (7) aufweist,
**dadurch gekennzeichnet,**
**dass** ein Ringelement (8) vorgesehen ist, das als solches eine Dichtlippenlauffläche (S) bildet auf welcher die Dichtlippe (7) aufsitzt, und das Ringelement (8) hinsichtlich seines Querschnitts derart gestaltet ist, dass dieses einen Buchsenabschnitt (8a) und einen sich im wesentlichen radial zur Lagerachse erstreckenden Ringabschnitt (8b) umfasst, wobei sich der Ringabschnitt (8b) in einem Zwischenbereich zwischen dem Wälzkörperbahnraum und der Dichtlippe (7) erstreckt.

2. Kupplungsausrücklagereinrichtung nach Anspruch 1, **dadurch gekennzeichnet, dass** die Dichtlippe (7) über wenigstens eine Dichtlippenkante (K) auf der Dichtlippenlauffläche (S) aufsitzt.

3. Kupplungsausrücklagereinrichtung nach Anspruch 1, **dadurch gekennzeichnet, dass** das Ringelement (8) auf einen Außenflächenabschnitt (9) des Innenrings (1) aufgesetzt ist.

4. Kupplungsausrücklagereinrichtung nach wenigstens einem der Ansprüche 1 bis 3, **dadurch gekennzeichnet, dass** der Ringabschnitt (8b) derart ausgebildet und angeordnet ist, dass dieser die Dichtlippe (7) gegenüber dem Wälzkörperbahnraum im wesentlichen vollständig abschirmt.

5. Kupplungsausrücklagereinrichtung nach wenigstens einem der Ansprüche 1 bis 4, **dadurch gekennzeichnet, dass** das zur Bildung der Dichtlippenstruktur (6) herangezogene Kunststoffmaterial ein Elastomermaterial ist.

6. Kupplungsausrücklagereinrichtung nach wenigstens einem der Ansprüche 1 bis 5, **dadurch gekennzeichnet, dass** eine Gelenkeinrichtung (10) vorgesehen ist, zur Abstützung der Lagereinrichtung derart, dass diese um zur Lagerachse (X) quer verlaufende Kippachsen (Q) kippbar ist.

7. Kupplungsausrücklagereinrichtung nach wenigstens einem der Ansprüche 1 bis 6, **dadurch gekennzeichnet, dass** die Dichtlippenstruktur (6) am Außenring (1) angebracht ist.

8. Kupplungsausrücklagereinrichtung nach wenigstens einem der Ansprüche 1 bis 7, **dadurch gekennzeichnet, dass** die Dichtlippenstruktur (6) über einen Armierungsring (13) an dem Außenring (2) angebracht ist.

9. Kupplungsausrücklagereinrichtung nach Anspruch 8, **dadurch gekennzeichnet, dass** der Armierungsring (13) auf einem Außenflächenabschnitt des Außenrings (2) sitzt

10. Kupplungsausrücklagereinrichtung nach Anspruch 9, **dadurch gekennzeichnet, dass** der Armierungsring (13) einen auf dem Außenflächenabschnitt des Außenrings (2) sitzenden Ringmantelabschnitt und einen sich an diesen anschließenden, hinter einer Stirnfläche des Außenringes (2) zum Innenring (1) radial einwärts vordringenden Ringscheibenabschnitt aufweist, und dass durch diesen Ringscheibenabschnitt ein Ringsteg gebildet wird, auf welchem ein Fußbereich der Dichtlippenstruktur (5) verankert ist.

11. Kupplungsausrücklagereinrichtung nach Anspruch 10, **dadurch gekennzeichnet, dass** der zum Stimbereich des Außenringes (2) auslaufende Endbereich des Außenringes (2) in einen Ringraum eindringt der zwischen einer Innenumfangsfläche des Armierungsringes und dem Fußbereich der Dichtlippenstruktur (5) definiert ist.

12. Kupplungsausrücklagereinrichtung nach Anspruch 11, **dadurch gekennzeichnet, dass** über den Fußbereich der Dichtlippenstruktur eine Kontaktzone (K2) definiert ist durch welche eine Abdichtende Anlage der Dichtlippenstruktur an dem Außenring (2) erreicht wird.

13. Kupplungsausrücklagereinrichtung nach wenigstens einem der Ansprüche 6 bis 12, **dadurch gekennzeichnet, dass** die Gelenkeinrichtung als Kalottenstruktur ausgeführt ist.

14. Kupplungsausrücklagereinrichtung nach Anspruch 13, **dadurch gekennzeichnet, dass** diese Kalottenstruktur einen Kalottenringabschnitt (10a) umfasst der sich in einem Zwischenbereich zwischen der Dichtungseinrichtung (5) und der Wälzkörperlaufbahn des Innenrings (1) erstreckt.

## Claims

1. Clutch disengagement bearing device having:
- an inner ring (1),
- an outer ring (2),
- a rolling body arrangement (3) which is held in a raceway chamber defined between the inner ring (1) and the outer ring (2),
- a thrust ring portion (4) for introducing into an associated clutch member an axial force transmitted via the rolling body arrangement (3), and
- a seal device (5) for sealing off a movement gap on a bearing rear side facing away from the thrust ring portion (4), wherein the seal device (5) comprises a sealing lip structure (6) which is produced from a plastics material and which has a sealing lip (7),
**characterized**
**in that** a ring element (8) is provided which itself forms a sealing lip running surface (S) on which the sealing lip (7) is seated, and the ring element (8) is designed with regard to its cross section such that it comprises a bush portion (8a) and a ring portion (8b) extending substantially radially with respect to the bearing axis, wherein the ring portion (8b) extends in an intermediate region between the rolling body raceway chamber and the sealing lip (7).

2. Clutch disengagement bearing device according to Claim 1, **characterized in that** the sealing lip (7) is seated via at least one sealing lip edge (K) on the sealing lip running surface (S).

3. Clutch disengagement bearing device according to Claim 1, **characterized in that** the ring element (8) is mounted on an outer surface portion (9) of the inner ring (1).

4. Clutch disengagement bearing device according to at least one of Claims 1 to 3, **characterized in that** the ring portion (8b) is designed and arranged such that it substantially completely shields the sealing lip (7) with respect to the rolling body raceway chamber.

5. Clutch disengagement bearing device according to at least one of Claims 1 to 4, **characterized in that** the plastics material used to form the sealing lip structure (6) is an elastomer material.

6. Clutch disengagement bearing device according to at least one of Claims 1 to 5, **characterized in that** a joint device (10) is provided for supporting the bearing device such that the latter can be tilted about tilt axes (Q) running perpendicular to the bearing axis (X).

7. Clutch disengagement bearing device according to at least one of Claims 1 to 6, **characterized in that** the sealing lip structure (6) is attached to the outer ring (2).

8. Clutch disengagement bearing device according to at least one of Claims 1 to 7, **characterized in that** the sealing lip structure (6) is attached to the outer ring (2) via a reinforcement ring (13).

9. Clutch disengagement bearing device according to Claim 8, **characterized in that** the reinforcement ring (13) is seated on an outer surface portion of the outer ring (2).

10. Clutch disengagement bearing device according to Claim 9, **characterized in that** the reinforcement ring (13) has a ring casing portion seated on the outer surface portion of the outer ring (2), and adjoining said ring casing portion a ring disc portion which, behind an end surface of the outer ring (2), projects radially inwards towards the inner ring (1), and **in that** said ring disc portion forms a ring web on which a base region of the sealing lip structure (6) is anchored.

11. Clutch disengagement bearing device according to Claim 10, **characterized in that** the end region of the outer ring (2), which tapers toward the face region of the outer ring (2), protrudes into an annular chamber defined between an inner circumferential surface of the reinforcement ring and the base region of the sealing lip structure (6).

12. Clutch disengagement bearing device according to Claim 11, **characterized in that** the base region of the sealing lip structure defines a contact zone (K2) at which sealing abutment of the sealing lip structure against the outer ring (2) takes place.

13. Clutch disengagement bearing device according to at least one of Claims 6 to 12, **characterized in that** the joint device is formed as a spherical cap structure.

14. Clutch disengagement bearing device according to Claim 13, **characterized in that** said spherical cap structure comprises a spherical cap ring portion (10a) which extends in an intermediate region between the seal device (5) and the rolling body raceway of the inner ring (1).

## Revendications

1. Dispositif de palier de débrayage, comprenant :
- une bague interne (1),
- une bague externe (2),
- un agencement de corps de roulement (3) qui est reçu dans un espace de chemin défini entre la bague interne (1) et la bague externe (2),
- une portion de bague de pression (4) pour introduire une force axiale guidée par le biais de l'agencement de corps de roulement (3) dans un organe d'embrayage associé, et
- un dispositif d'étanchéité (5) pour étancher une fente de déplacement sur un côté arrière du palier opposé à la portion de bague de pression (4), le dispositif d'étanchéité (5) comprenant une structure à lèvre d'étanchéité (6) qui est fabriquée en un matériau en plastique et qui présente une lèvre d'étanchéité (7),
**caractérisé en ce**
**qu'**un élément annulaire (8) est prévu, lequel forme en tant que tel une surface de roulement de lèvre d'étanchéité (S), sur laquelle repose la lèvre d'étanchéité (7), et l'élément annulaire (8) est configuré, en ce qui concerne sa section transversale, de telle sorte qu'il comprenne une portion de douille (8a) et une portion de bague (8b) s'étendant essentiellement radialement par rapport à l'axe de palier, la portion de bague (8b) s'étendant dans une région intermédiaire entre l'espace de chemin pour corps de roulement et la lèvre d'étanchéité (7).

2. Dispositif de palier de débrayage selon la revendication 1, **caractérisé en ce que** la lèvre d'étanchéité (7) repose par le biais d'au moins une arête de lèvre d'étanchéité (K) sur la surface de roulement de la lèvre d'étanchéité (S).

3. Dispositif de palier de débrayage selon la revendication 1, **caractérisé en ce que** l'élément annulaire (8) est posé sur une portion de surface extérieure (9) de la bague interne (1).

4. Dispositif de palier de débrayage selon au moins l'une quelconque des revendications 1 à 3, **caractérisé en ce que** la portion de bague (8b) est réalisée et disposée de telle sorte que celle-ci protège essentiellement complètement la lèvre d'étanchéité (7) vis-à-vis de l'espace de chemin pour corps de roulement.

5. Dispositif de palier de débrayage selon au moins l'une quelconque des revendications 1 à 4, **caractérisé en ce que** le matériau en plastique utilisé pour former la structure de lèvre d'étanchéité (6) est un matériau élastomère.

6. Dispositif de palier de débrayage selon au moins l'une quelconque des revendications 1 à 5, **caractérisé en ce qu'**il est prévu un dispositif d'articulation (10) pour supporter le dispositif de palier de telle sorte que celui-ci puisse basculer autour d'axes de basculement (Q) s'étendant transversalement par rapport à l'axe de palier (X).

7. Dispositif de palier de débrayage selon au moins l'une quelconque des revendications 1 à 6, **caractérisé en ce que** la structure de lèvre d'étanchéité (6) est montée sur la bague externe (1).

8. Dispositif de palier de débrayage selon au moins l'une quelconque des revendications 1 à 7, **caractérisé en ce que** la structure de lèvre d'étanchéité (6) est montée sur la bague externe (2) par le biais d'une bague de renforcement (13).

9. Dispositif de palier de débrayage selon la revendication 8, **caractérisé en ce que** la bague de renforcement (13) repose sur une portion de surface extérieure de la bague externe (2).

10. Dispositif de palier de débrayage selon la revendication 9, **caractérisé en ce que** la bague de renforcement (13) présente une portion d'enveloppe de bague reposant sur la portion de surface extérieure de la bague externe (2), et une portion de disque annulaire s'y raccordant, saillant radialement vers l'intérieur par rapport à la bague interne (1) derrière une surface frontale de la bague externe (2), et **en ce que** cette portion de disque annulaire forme une nervure annulaire sur laquelle est ancrée une région de base de la structure de lèvre d'étanchéité (5).

11. Dispositif de palier de débrayage selon la revendication 10, **caractérisé en ce que** la région d'extrémité de la bague externe (2) se terminant vers la région frontale de la bague externe (2) pénètre dans un espace annulaire qui est défini entre une surface périphérique interne de la bague de renforcement et la région de base de la structure de lèvre d'étanchéité (5).

12. Dispositif de palier de débrayage selon la revendication 11, **caractérisé en ce qu'**une zone de contact (K2) est définie par le biais de la région de base de la structure de lèvre d'étanchéité, grâce à laquelle un appui hermétique de la structure de lèvre d'étanchéité sur la bague externe (2) est réalisé.

13. Dispositif de palier de débrayage selon au moins l'une quelconque des revendications 6 à 12, **caractérisé en ce que** le dispositif d'articulation est réalisé sous forme de structure à calotte.

14. Dispositif de palier de débrayage selon la revendication 13, **caractérisé en ce que** cette structure à calotte comprend une portion de bague de calotte (10a) qui s'étend dans une région intermédiaire entre le dispositif d'étanchéité (5) et le chemin de roulement pour corps de roulement de la bague interne (1).
